# EUROPEAN PATENT APPLICATION

(11) **EP 4 436 130 A1**
(43) Date of publication of application: **25.09.2024**
(21) Application number: 23210077.6
(22) Date of filing: 15.11.2023
(51) Int. Cl.: H04L 47/10, H04L 47/2441, H04W 76/14, H04W 84/12, H04W 28/02

(54) **APPARATUS, SYSTEM, AND METHOD OF COMMUNICATING END-TO-END (E2E) QUALITY OF SERVICE (QOS) INFORMATION**

(30) Priority: 19.03.2023 US 202318186187
(71) Applicant: INTEL Corporation, Santa Clara, CA 95054 (US)
(72) Inventor: AKHMETOV, Dmitry, Hillsboro (US); VANNITHAMBY, Rath, Portland, OR 97229 (US); CANPOLAT, Necati, Beaverton, OR 97006 (US); CAVALCANTI, Dave A., Portland (US); DAS, Dibakar, Hillsboro (US); CARIOU, Laurent, 29290 Milizac (FR); PEREZ-RAMIREZ, Javier, North Plains, OR 97133 (US)
(74) Representative: Viering, Jentschura & Partner mbB Patent- und Rechtsanwälte

(57) **Abstract**

For example, a first non Access Point (AP) (non-AP) wireless communication station (STA) and/or an AP may be configured to communicate End to End (E2E) Quality of Service (QoS) information corresponding to an E2E traffic flow. For example, the non-AP STA may be configured to set E2E QoS information in a Stream Classification Service (SCS) descriptor element. For example, the E2E QoS information may be configured to indicate an E2E QoS requirement for an E2E traffic flow to be communicated between the first non-AP STA and a second non-AP STA. For example, the non-AP STA may be configured to transmit an SCS request to the AP. For example, the SCS request may include the SCS descriptor element.

## Description

### TECHNICAL FIELD

Aspects described herein generally relate to communicating End-to-End (E2E) Quality of Service (QoS) information.

### BACKGROUND

Devices in a wireless communication system may be configured to communicate according to communication protocols, which may be configured to support high-throughput data for users of wireless communication devices.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a multi-link communication scheme, which may be implemented in accordance with some demonstrative aspects.
Fig. 3 is a schematic illustration of a multi-link communication scheme, which may be implemented in accordance with some demonstrative aspects.
Fig. 4 is a schematic illustration of a Stream Classification Service (SCS) descriptor element, in accordance with some demonstrative aspects.
Fig. 5 is a schematic illustration of a Quality of Service (QoS) characteristics element, in accordance with some demonstrative aspects.
Fig. 6 is a schematic illustration of an SCS descriptor element, in accordance with some demonstrative aspects.
Fig. 7 is a schematic illustration of End-to-End (E2E) QoS information signaling between a first wireless communication station (STA) and an Access Point (AP) to schedule communication of an E2E traffic flow to be communicated between the first STA and a second STA, in accordance with some demonstrative aspects.
Fig. 8 is a schematic illustration of E2E QoS information signaling between a first STA and an AP to schedule communication of an E2E traffic flow to be communicated between the first STA and a second STA, in accordance with some demonstrative aspects.
Fig. 9 is a schematic illustration of E2E QoS information signaling between a first STA and an AP to schedule communication of a bidirectional E2E traffic flow to be communicated between the first STA and a second STA , in accordance with some demonstrative aspects.
Fig. 10 is a schematic flow-chart illustration of a method of communicating E2E QoS information, in accordance with some demonstrative aspects.
Fig. 11 is a schematic flow-chart illustration of a method of communicating E2E QoS information, in accordance with some demonstrative aspects.
Fig. 12 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology-Telecommunications and Information Exchange between Systems Local and Metropolitan Area Networks-Specific Requirements; Part 11: Wireless LAN Medium Access Control (MAC) and Physical Layer (PHY) Specifications, December, 2020) ;* and/or IEEE 802.11be (*IEEE P802.11be*/*D2.0 Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), May 2022*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBeeTM, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a Wi-Fi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band.

Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by a mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

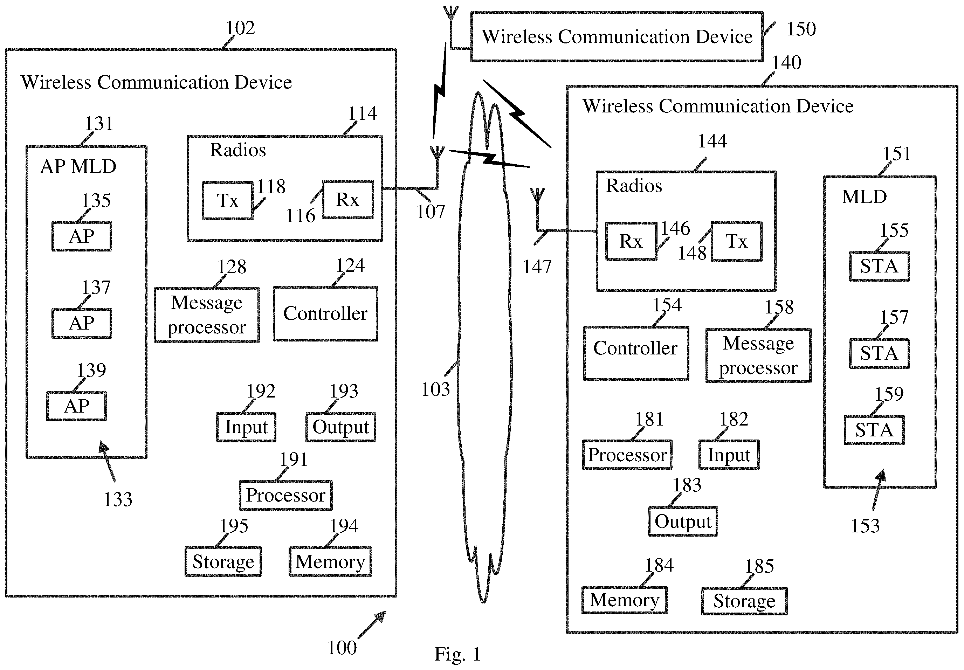

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 150, and/or one or more other devices.

In some demonstrative aspects, devices 102, 140 and/or 150 may include a mobile device or a non-mobile, e.g., a static, device.

For example, devices 102, 140 and/or 150 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player, or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 150 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternative include one or more channels in an mmWave wireless communication frequency band.

In other aspects, WM 103 may include any other type of channel over any other frequency band.

In some demonstrative aspects, device 102, device 140, and/or device 150 may include one or more radios including circuitry and/or logic to perform wireless communication between devices 102, 140, 150 and/or one or more other wireless communication devices. For example, device 102 may include one or more radios 114, and/or device 140 may include one or more radios 144.

In some demonstrative aspects, radios 114 and/or 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include one or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 150 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 150 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or the one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 150 may include, operate as, perform the role of, and/or perform one or more functionalities of, one or more STAs. For example, device 102 may include at least one STA, device 140 may include at least one STA, and/or device 150 may include at least one STA.

In some demonstrative aspects, device 102, device 140, and/or device 150 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, devices 102, 140 and/or 150 may be configured to perform one or more operations, and/or functionalities of a WiFi 8 STA.

In other aspects, for example, devices 102, 140 and/or 150 may be configured to perform one or more operations, and/or functionalities of an Ultra High Reliability (UHR) STA.

In other aspects, for example, devices 102, 140 and/or 150 may be configured to perform one or more operations, and/or functionalities of any other additional or alternative type of STA.

In other aspects, device 102, device 140, and/or device 150 may include, operate as, perform the role of, and/or perform one or more functionalities of, any other wireless device and/or station, e.g., a WLAN STA, a WiFi STA, and the like.

In some demonstrative aspects, device 102, device 140, and/or device 150 may be configured operate as, perform the role of, and/or perform one or more functionalities of, an access point (AP), e.g., an EHT AP STA.

In some demonstrative aspects, device 102, device 140, and/or device 150 may be configured to operate as, perform the role of, and/or perform one or more functionalities of, a non-AP STA, e.g., an EHT non-AP STA.

In other aspects, device 102, device 140, and/or device 150 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF).The AP may perform any other additional or alternative functionality.

In some demonstrative aspects devices 102, 140, and/or 150 may be configured to communicate in an EHT network, and/or any other network.

In some demonstrative aspects, devices 102, 140, and/or 150 may be configured to operate in accordance with one or more Specifications, for example, including one or more *IEEE 802.11 Specifications,* e.g., an *IEEE 802.11-2020 Specification,* an *IEEE 802.11be Specification,* and/or any other specification and/or protocol.

In some demonstrative aspects, device 102, device 140, and/or device 150 may include, operate as, perform a role of, and/or perform the functionality of, one or more multi-link logical entities, e.g., as described below.

In other aspect, device 102, device 140, and/or device 150 may include, operate as, perform a role of, and/or perform the functionality of, any other entities, e.g., which are not multi-link logical entities.

For example, a multi-link logical entity may include a logical entity that contains one or more STAs. The logical entity may have one MAC data service interface and primitives to the logical link control (LLC) and a single address associated with the interface, which can be used to communicate on a distribution system medium (DSM). For example, the DSM may include a medium or set of media used by a distribution system (DS) for communications between APs, mesh gates, and the portal of an extended service set (ESS). For example, the DS may include a system used to interconnect a set of basic service sets (BSSs) and integrated local area networks (LANs) to create an extended service set (ESS). In one example, a multi-link logical entity may allow STAs within the multi-link logical entity to have the same MAC address. The multi-link entity may perform any other additional or alternative functionality.

In some demonstrative aspects, device 102, device 140, and/or device 150 may include, operate as, perform a role of, and/or perform the functionality of, a Multi-Link Device (MLD). For example, device 102 may include, operate as, perform a role of, and/or perform the functionality of, at least one MLD, and/or device 140 may include, operate as, perform a role of, and/or perform the functionality of, at least one MLD, e.g., as described below.

For example, an MLD may include a device that is a logical entity and has more than one affiliated STA and has a single MAC service access point (SAP) to LLC, which includes one MAC data service. The MLD may perform any other additional or alternative functionality.

In some demonstrative aspects, for example, an infrastructure framework may include a multi-link AP logical entity, which includes APs, e.g., on one side, and a multi-link non-AP logical entity, which includes non-APs, e.g., on the other side.

In some demonstrative aspects, device 102, device 140, and/or device 150 may be configured to operate as, perform the role of, and/or perform one or more functionalities of, an AP MLD.

In some demonstrative aspects, device 102, device 140, and/or device 150 may be configured to operate as, perform the role of, and/or perform one or more functionalities of, a non-AP MLD.

In other aspects, device 102, device 140, and/or device 150 may operate as, perform the role of, and/or perform one or more functionalities of, any other additional or alternative device and/or station.

For example, an AP MLD may include an MLD, where each STA affiliated with the MLD is an AP. In one example, the AP MLD may include a multi-link logical entity, where each STA within the multi-link logical entity is an EHT AP. The AP MLD may perform any other additional or alternative functionality.

For example, a non-AP MLD may include an MLD, where each STA affiliated with the MLD is a non-AP STA. In one example, the non-AP MLD may include a multi-link logical entity, where each STA within the multi-link logical entity is a non-AP EHT STA. The non-AP MLD may perform any other additional or alternative functionality.

In one example, a multi-link infrastructure framework may be configured as an extension from a one link operation between two STAs, e.g., an AP and a non-AP STA.

In some demonstrative aspects, controller 124 may be configured to cause, trigger, instruct and/or control device 102 to operate as, perform a role of, and/or perform one or more operations and/or functionalities of, an AP MLD 131 including a plurality of AP STAs 133, e.g., including an AP STA 135, an AP STA 137 and/or an AP STA 139. In some aspects, as shown in Fig. 1, AP MLD 131 may include three AP STAs. In other aspects, AP MLD 131 may include any other number of AP STAs.

In one example, AP STA 135, AP STA 137 and/or AP STA 139 may operate as, perform a role of, and/or perform one or more operations and/or functionalities of, an EHT AP STA. In other aspects, AP STA 135, AP STA 137 and/or AP STA 139 may perform any other additional or alternative functionality.

In some demonstrative aspects, for example, the one or more radios 114 may include, for example, a radio for communication by AP STA 135 over a first wireless communication frequency channel and/or frequency band, e.g., a 2.4GHz band, as described below.

In some demonstrative aspects, for example, the one or more radios 114 may include, for example, a radio for communication by AP STA 137 over a second wireless communication frequency channel and/or frequency band, e.g., a 5GHz band, as described below.

In some demonstrative aspects, for example, the one or more radios 114 may include, for example, a radio for communication by AP STA 139 over a third wireless communication frequency channel and/or frequency band, e.g., a 6GHz band, as described below.

In some demonstrative aspects, the radios 114 utilized by APs 133 may be implemented as separate radios. In other aspects, the radios 114 utilized by APs 133 may be implemented by one or more shared and/or common radios and/or radio components.

In other aspects, controller 124 may be configured to cause, trigger, instruct and/or control device 102 to operate as, perform a role of, and/or perform one or more operations and/or functionalities of, any other additional or alternative entity and/or STA, e.g., a single STA, multiple STAs, and/or a non-MI,D entity.

In some demonstrative aspects, controller 154 may be configured to cause, trigger, instruct and/or control device 140 to operate as, perform a role of, and/or perform one or more operations and/or functionalities of, an MLD 151 including a plurality of STAs 153, e.g., including a STA 155, a STA 157 and/or a STA 159. In some aspects, as shown in Fig. 1, MLD 151 may include three STAs. In other aspects, MLD 151 may include any other number of STAs.

In one example, STA 155, STA 157 and/or STA 159 may operate as, perform a role of, and/or perform one or more operations and/or functionalities of, an EHT STA. In other aspects, STA 155, STA 157 and/or STA 159 may perform any other additional or alternative functionality.

In some demonstrative aspects, for example, the one or more radios 144 may include, for example, a radio for communication by STA 155 over a first wireless communication frequency channel and/or frequency band, e.g., a 2.4GHz band, as described below.

In some demonstrative aspects, for example, the one or more radios 144 may include, for example, a radio for communication by STA 157 over a second wireless communication frequency channel and/or frequency band, e.g., a 5GHz band, as described below.

In some demonstrative aspects, for example, the one or more radios 144 may include, for example, a radio for communication by STA 159 over a third wireless communication frequency channel and/or frequency band, e.g., a 6GHz band, as described below.

In some demonstrative aspects, the radios 144 utilized by STAs 153 may be implemented as separate radios. In other aspects, the radios 144 utilized by STAs 153 may be implemented by one or more shared and/or common radios and/or radio components.

In some demonstrative aspects, controller 154 may be configured to cause, trigger, instruct and/or control MLD 151 to operate as, perform a role of, and/or perform one or more operations and/or functionalities of, a non-AP MLD. For example, STA 155, STA 157 and/or STA 159 may operate as, perform a role of, and/or perform one or more operations and/or functionalities of, a non-AP EHT STA.

In some demonstrative aspects, controller 154 may be configured to cause, trigger, instruct and/or control MLD 151 to operate as, perform a role of, and/or perform one or more operations and/or functionalities of, an AP MLD. For example, STA 155, STA 157 and/or STA 159 may operate as, perform a role of, and/or perform one or more operations and/or functionalities of, an AP EHT STA.

In other aspects controller 154 may be configured to cause, trigger, instruct and/or control device 140 to operate as, perform a role of, and/or perform one or more operations and/or functionalities of, any other additional or alternative entity and/or STA, e.g., a single STA, multiple STAs, and/or a non-MLD entity.

In some demonstrative aspects, device 150 may be configured to operate as, perform a role of, and/or perform one or more operations and/or functionalities of, a non-AP STA, e.g., of a non-AP MLD. For example, device 150 may operate as, perform a role of, and/or perform one or more operations and/or functionalities of, a non-AP EHT STA.

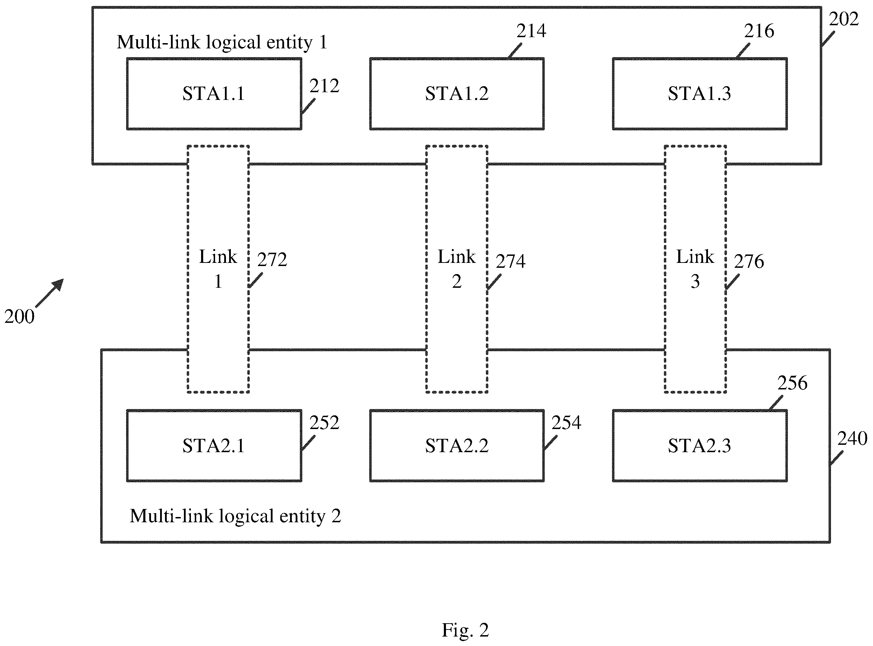

Reference is made to Fig. 2, which schematically illustrates a multi-link communication scheme 200, which may be implemented in accordance with some demonstrative aspects.

As shown in Fig. 2, a first multi-link logical entity 202 ("multi-link logical entity 1"), e.g., a first MLD, may include a plurality of STAs, e.g., including a STA 212, a STA 214, and a STA 216. In one example, AP MLD 131 (Fig. 1) may perform one or more operations, one or more functionalities, the role of, and/or the functionality of, multi-link logical entity 202.

As shown in Fig. 2, a second multi-link logical entity 240 ("multi-link logical entity 2"), e.g., a second MLD, may include a plurality of STAs, e.g., including a STA 252, a STA 254, and a STA 256. In one example, MLD 151 (Fig. 1) may perform one or more operations, one or more functionalities, the role of, and/or the functionality of, multi-link logical entity 240.

As shown in Fig. 2, multi-link logical entity 202 and multi-link logical entity 240 may be configured to form, setup and/or communicate over a plurality of links, for example, including a link 272 between STA 212 and STA 252, a link 274 between STA 214 and STA 254, and/or a link 276 between STA 216 and STA 256.

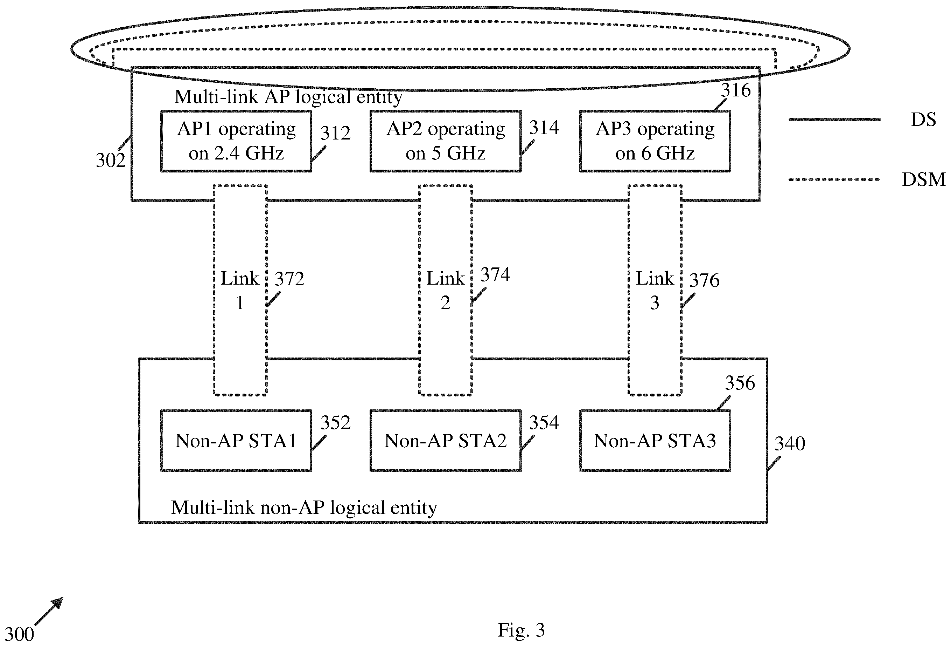

Reference is made to Fig. 3, which schematically illustrates a multi-link communication scheme 300, which may be implemented in accordance with some demonstrative aspects.

As shown in Fig. 3, a multi-link AP logical entity 302, e.g., an AP MLD, may include a plurality of AP STAs, e.g., including an AP STA 312, an AP STA 314, and an AP STA 316. In one example, AP MLD 131 (Fig. 1) may perform one or more operations, one or more functionalities, the role of, and/or the functionality of, multi-link AP logical entity 302.

As shown in Fig. 3, a multi-link non-AP logical entity 340, e.g., a non-AP MLD, may include a plurality of non-AP STAs, e.g., including a non-AP STA 352, a non-AP STA 354, and a non-AP STA 356. In one example, MLD 151 (Fig. 1) may perform one or more operations, one or more functionalities, the role of, and/or the functionality of, multi-link non-AP logical entity 340.

As shown in Fig. 3, multi-link AP logical entity 302 and multi-link non-AP logical entity 340 may be configured to form, setup and/or communicate over a plurality of links, for example, including a link 372 between AP STA 312 and non-AP STA 352, a link 374 between AP STA 314 and non-AP STA 354, and/or a link 376 between AP STA 316 and non-AP STA 356.

For example, as shown in Fig. 3, multi-link AP logical entity 302 may include a multi-band AP MLD, which may be configured to communicate over a plurality of wireless communication frequency bands. For example, as shown in Fig. 3, AP STA 312 may be configured to communicate over a 2.4GHz frequency band, AP STA 314 may be configured to communicate over a 5GHz frequency band, and/or AP STA 316 may be configured to communicate over a 6GHz frequency band. In other aspects, AP STA 312, AP STA 314, and/or AP STA 316, may be configured to communicate over any other additional or alternative wireless communication frequency bands.

Referring back to Fig. 1, in some demonstrative aspects, devices 102, 140 and/or 150 may be configured to implement one or more mechanisms to provide a technical solution to support wireless communication with improved and/or reduced End to End (E2E) latency, e.g., as described below.

In some demonstrative aspects, devices 102, 140 and/or 150 may be configured to implement one or more mechanisms to provide a technical solution to support improved E2E Quality of Service (QoS) management for wireless communication, e.g., as described below.

In some demonstrative aspects, devices 102, 140 and/or 150 may be configured to implement one or more mechanisms to provide a technical solution to support the reduced E2E latency and/or E2E QoS management for wireless communication, e.g., as described below.

In some demonstrative aspects, reduced E2E latency and/or E2E QoS management may be achieved, for example, by designing low-latency channel access schemes, e.g., utilizing scheduling and/or any other mechanism.

For example, one or more schemes may be configured, e.g., in accordance with an *IEEE 802.11be Specification,* for example, on top of multi-user (MU) scheduling mechanisms, e.g., in accordance with an *IEEE 802.11ax Specification.*

In one example, multi-link operations, e.g., according to an MLD architecture, may be implemented to provide a higher channel access opportunity.

In some demonstrative aspects, reduced E2E latency and/or QoS E2E management may be achieved, for example, by signaling E2E QoS requirements, for example, between one more STAs and an AP, e.g., as described below.

In one example, a multi-link SCS setup mechanism, e.g., in accordance with the *IEEE 802.11be Specification,* may be enhanced and/or extended, for example, to allow semi-static signaling, e.g., as described below.

In some demonstrative aspects, devices 102, 140 and/or 150 may be configured to implement and/or support one or more applications of extended Reality (XR), e.g., as described below.

In some demonstrative aspects, the XR applications may include, for example, Augmented Reality (AR) applications, Virtual Reality (VR) applications, and/or any other applications.

For example, the XR applications may be configured to combine, mirror, and/or interact between a physical world and a "digital twin world".

In one example, the XR applications, e.g., XR-specific applications, may increasingly become popular, and/or may be part of many important use-cases, which may have to be supported by future generations of Wi-Fi.

In some demonstrative aspects, an XR application may utilize a session ( "XR-session") to exchange information between devices supporting the XR application. For example, the XR session may be characterized by a closed loop control between a first device, e e.g., a Head Mounted Display (HMD) device, which may be implemented as a low compute-intensive HMD device, and a second device, e.g., a computing device, e.g., a high compute-intensive device, for example, a laptop. In one example, device 150 may be implemented to include the first device, e.g., the HMD device or any other XR device, and/or device 104 may be implemented to include the second device, e.g., the laptop device or any other computing device.

For example, the HMD device may be configured to send out information to the computing device for processing, and to receive from the computing device processed information to be used by the HMD device. For example, the HMD device may send to the computing device sensor information, e.g., Inertial Measurement Unit (IMU) information, camera images, and/or the like. For example, the processed information from the computing device may include rendered images and/or video frames, HMD pose estimates, and/or the like.

For example, the XR application may have very low, e.g., worst-case, latency requirements.

In one example, IMU samples of an IMU of the HMD device may be generated every 2ms with a latency bound of 10ms. However, video frames may be generated and may need to be displayed at a different periodicity. In one example, video frames may be generated for display every ~16ms, e.g., at a 60 frames per second (fps) resolution. In another example, video frames may be generated for display every ~8ms, e.g., at a 120 fps resolution.

For example, performance of an XR system may be characterized by a Motion-to-Photon (MTP) latency, which may depend, for example, on a round-trip latency from the IMU samples being generated by the IMU, until a time a video frame corresponding to the IMU samples is being displayed at the HMD device.

In some demonstrative aspects, there may be a need to provide a technical solution to support latency requirements of communications between devices, e.g., the HMD device and the computing device, according to one or more communication topologies, e.g., as described below.

In one example, there may be a need to provide a technical solution to support latency requirements of communications between devices, e.g., the HMD device and the computing device, for example, in case the two devices are not connected to each other via a direct link, e.g., a P2P link.

In another example, there may be a need to provide a technical solution to support latency requirements of communications between devices, e.g., the HMD device and the computing device, for example, in case the two devices are connected via a P2P link, which is managed by another network entity, e.g., an AP.

In one example, for example, according to a first topology scenario, the two devices, e.g., the computing device and the HMD device, may be associated with a same AP. For example, non-AP STAs implemented by device 140 and device 150 may be associated with an AP implemented by device 102.

In another example, for example, according to a second topology scenario, the two devices, e.g., the computing device and the HMD device, may communicate data processed at a remote entity, e.g., a clod server. For example, the computing device may forward IMU data received from the HMD device to a cloud service, for example, over a P2P link between the computing device and an infrastructure AP associated with the computing device.

According to this example, rendering of images or video may be performed in one or more levels. For example, a first level of rendering may be performed at the cloud service, and rendered data may be passed from the cloud service to the computing device, e.g., via the associated infrastructure AP. For example, a second level of rendering, e.g., final rendering, may be performed at the computing device, and a final output may be passed to the HMD device.

In another example, for example, according to a third topology scenario, the two devices, e.g., the HMD device and the computing device, may be connected over a P2P link, which may be in a same channel as an infrastructure AP. For example, the infrastructure AP may manage channel access on the P2P link, e.g., via a restricted Target Wake Time (TWT) (r-TWT) mechanism or a Triggered P2P mechanism. For example, non-AP STAs implemented by device 140 and device 105 may be connected via a P2P link between devices 140 and 150. For example, the P2p link may be managed by an Ap implemented by device 102.

In some demonstrative aspects, devices 102, 140 and/or 150 may be configured to implement one or more operations and/or functionalities of an E2E QoS signaling mechanism, which may be configured to provide a technical solution to support signaling one or more E2E QoS requirements, e.g., as described below.

In some demonstrative aspects, the E2E QoS signaling mechanism may be configured to support signaling E2E requirements of an XR session, for example, to a network element, e.g., an AP, As described below.

In some demonstrative aspects, the E2E QoS signaling mechanism may be configured to provide a technical solution to support network element, e.g., AP, to be aware of E2E latency requirements of an XR session, for example, in the topology scenarios described above.

In some demonstrative aspects, the E2E QoS signaling mechanism may be configured to provide a technical solution to address a technical gap in baseline of QoS negotiation mechanisms, e.g., SCS or TWT negotiation mechanisms, which may be configured to support QoS negotiation for a single hop, e.g., a single direct hop between an HMD device and an AP, or a single direct hop between an AP and a STA.

In some demonstrative aspects, the E2E QoS signaling mechanism may be configured to provide a technical solution to support a STA participating in an XR session to provide the E2E latency requirement for the XR session to an AP, which manages and/or controls one or more links to be used for communication of QoS data of the XR session, e.g., as described below.

In some demonstrative aspects, the E2E QoS signaling mechanism may be configured to provide a technical solution to support the AP in scheduling communications of the XR secession, for example, according to the E2E latency requirement of the XR session, e.g., as described below.

In some demonstrative aspects, the E2E latency requirement may relate to an E2E latency of a single hop path, or a multi hop path, which may be conveyed, for example, between higher layers and a MAC layer. For example, the E2E latency may include network latency, processing latency, and/or any other suitable latencies. For example, E2E latency requirements may change in real-time, for example, depending on applications and/or platform specific factors.

In some demonstrative aspects, a STA, e.g., a STA implemented by device 102 and/or a STA implemented by device 140, may be configured to communicate E2E QoS information to its peer AP, for example, to indicate an E2E QoS requirement for an E2E traffic flow, e.g., as described below.

In some demonstrative aspects, devices 102, 140 and/or 150 may be configured to implement one or more operations and/or functionalities of an E2E QoS signaling mechanism, which may be configured to provide a technical solution to support scheduling of the E2E traffic flow, and/or to signal the E2E QoS information in a network, e.g., as described below.

In some demonstrative aspects, devices 102, 140 and/or 150 may be configured to utilize an SCS setup request frame from a STA to carry additional information, for example, the E2E QoS information, e.g., an overall latency bound, which may allow a recipient of the SCS setup request frame, to determine an overall QoS requirement of a QoS stream, for example, a unidirectional QoS stream or a bidirectional QoS stream, e.g., as described below.

In some demonstrative aspects, devices 102, 140 and/or 150 may be configured to generate, process and/or communicate the E2E QoS information, e.g., as described below.

In some demonstrative aspects, the E2E QoS information may be defined, generated and/or provided by an application, a processor, a module, an OS, and/or any other element executed by a device, e.g., device 102, as described below.

In some demonstrative aspects, devices 102, 140 and/or 150 may be configured to generate, process and/or communicate one or more frames and/or messages, for example, based on the E2E QoS information, e.g., as described below.

In some demonstrative aspects, devices 102, 140 and/or 150 may be configured to generate, process and/or communicate one or more frames and/or messages including the E2E QoS information, e.g., as described below.

In some demonstrative aspects, devices 102, 140 and/or 150 may be configured to generate, process and/or communicate one or more frames and/or messages including one or more information elements, which are based on the E2E QoS information, e.g., as described below.

In some demonstrative aspects, a STA, e.g., a STA implemented by device 102 and/or a STA implemented by device 150, may be configured to signal E2E QoS information of an E2E traffic flow, e.g., as described below.

In some demonstrative aspects, a STA, e.g., a STA implemented by device 102 and/or a STA implemented by device 150, may be configured to signal the E2E QoS information, for example, as part of a SCS descriptor of an SCS request sent to an AP, e.g., as described below.

In one example, controller 124 may be configured to generate, process and/or communicate one or more frames and/or messages including one or more information elements, which are based on the E2E QoS information, e.g., as described below.

In one example, controller 154 may be configured to generate, process and/or communicate one or more frames and/or messages including one or more information elements, which are based the E2E QoS information, e.g., as described below.

In some demonstrative aspects, a STA may signal the E2E QoS information to an AP, for example, using an SCS descriptor element and/or any other element, in a SCS Request frame, e.g., as described below.

In some demonstrative aspects, an AP may use the E2E QoS information to schedule communications of the E2E traffic flow, e.g., as described below.

In some demonstrative aspects, controller 154 may be configured to control, trigger, instruct, and/or cause a non-AP STA implemented by device 140 to set E2E Quality QoS information in an SCS descriptor element, e.g., as described below.

In some demonstrative aspects, the E2E QoS information may be configured to indicate an E2E QoS requirement for an E2E traffic flow to be communicated between device 140 and a second non-AP STA, for example, a non-AP STA implemented by device 150, e.g., as described below.

In some demonstrative aspects, controller 154 may be configured to control, trigger, instruct, and/or cause the non-AP STA implemented by device 140 to transmit an SCS request to an AP, for example, an AP implemented by device 102, e.g., as described below.

In some demonstrative aspects, the SCS request may include the SCS descriptor element, e.g., as described below.

In some demonstrative aspects, controller 124 may be configured to control, trigger, instruct, and/or cause the AP implemented by device 102 to identify E2E QoS information in an SCS descriptor element, e.g., as described below.

In some demonstrative aspects, the SCS descriptor element may be in a SCS request from a first non-AP STA, e.g., as described below.

In some demonstrative aspects, the E2E QoS information in the SCS descriptor element received by the AP implemented by device 102 may be configured to indicate an E2E QoS requirement for an E2E traffic flow to be communicated between the first non-AP STA and a second non-AP STA, e.g., as described below.

In some demonstrative aspects, the SCS request may include the SCS request transmitted by the first non-AP STA implemented by device 140. For example, controller 124 may be configured to control, trigger, instruct, and/or cause the AP implemented by device 102 to identify the E2E QoS information in the SCS descriptor element, which is in the SCS request transmitted by the first non-AP STA implemented by device 140. For example, the E2E QoS information may be configured to indicate, e.g., to the AP implemented by device 102, the E2E QoS requirement for the E2E traffic flow to be communicated between the first non-AP STA implemented by device 140 and the second non-AP STA implemented by device 150.

In some demonstrative aspects, controller 124 may be configured to control, trigger, instruct, and/or cause the AP implemented by device 102 to schedule communications of the first non-AP device, for example, based on the E2E QoS requirement, e.g., as described below.

In some demonstrative aspects, the E2E QoS information may include E2E latency bound information configured to indicate an E2E latency bound for the E2E traffic flow to be communicated between the first non-AP STA, e.g.. implemented by device 140, and the second non-AP STA, e.g., implemented by device 150, e.g., as described below.

In some demonstrative aspects, the E2E QoS information may include a destination STA address, which may be configured, for example, to identify an address of the second non-AP STA, e.g., implemented by device 150, e.g., as described below.

In some demonstrative aspects, the E2E QoS information may include a directionality indicator, which may be configured, for example, to indicate whether the E2E traffic flow includes a unidirectional stream, e.g., as described below.

In some demonstrative aspects, the unidirectional stream may include, for example, an end-to-end traffic flow from a first STA (STA-1), e.g., a first non-AP STA, to a second STA (STA-2), e.g., a second non-AP STA, for example, possibly via one or more intermediate nodes, e.g., one or more infrastructure APs and/or any other network elements and/or nodes.

In some demonstrative aspects, the directionality indicator may be configured, for example, to indicate whether the E2E traffic flow includes a non-unidirectional stream, for example, a bidirectional stream, e.g., as described below.

In some demonstrative aspects, a bidirectional stream may include, for example, an aggregation of a plurality of flows, e.g., including two correlated unidirectional flows. For example, the bidirectional stream may include a first unidirectional stream and a second unidirectional stream. For example, the first unidirectional stream may be from the first STA to the second STA (STA-1 to STA-2). For example, the first unidirectional stream may carry IMU data from the first STA to the second STA. For example, the second unidirectional stream may be from the second STA to the first STA (STA-2 to STA-1). For example, the second unidirectional stream may carry video frames and/or any other data from the second STA to the first STA.

In one example, the first unidirectional stream may be communicated from the first STA to the second STA, for example, via an AP, e.g., an infrastructure AP associated with the first STA and/or the second STA. In one example, the second unidirectional stream may be communicated from the second STA to the first STA, for example, via the AP.

In some demonstrative aspects, the E2E QoS information may include processing delay information to indicate a processing delay of the first non-AP STA, e.g., implemented by device 140, to process data of the E2E traffic flow, e.g., as described below.

In other aspects, the E2E QoS information may include any other additional and/or alternative information, e.g., as described below.

In some demonstrative aspects, the SCS descriptor element, which includes the E2E QoS information, may include MTP latency bound information to indicate an MTP latency bound for the E2E traffic flow, e.g., as described below.

In some demonstrative aspects, the SCS descriptor element may be configured to include a first SCS Identifier (SCSID) to identify an SCS stream between the first non-AP STA, e.g., implemented by device 140, and the AP, e.g., implemented by device 102, e.g., as described below.

In some demonstrative aspects, the E2E QoS information may include a second SCSID, which may be configured, for example, to identify an SCS stream between the second non-AP STA, e.g., implemented by device 150, and the AP, e.g., implemented by device 102, e.g., as described below.

In other aspects, the SCS descriptor element may include any other additional and/or alternative information, e.g., as described below.

In some demonstrative aspects, some or all of the E2E QoS information may be set in a QoS characteristics element in the SCS descriptor element, e.g., as described below.

In some demonstrative aspects, controller 154 may be configured to control, trigger, instruct, and/or cause the non-AP STA implemented by device 140 to set the E2E QoS information in a QoS characteristics element in the SCS descriptor element, e.g., as described below.

In some demonstrative aspects, controller 124 may be configured to control, trigger, instruct, and/or cause the AP implemented by device 102 to identity the E2E QoS information in the QoS characteristics element in the SCS descriptor element, e.g., as described below.

In some demonstrative aspects, controller 124 may be configured to control, trigger, instruct, and/or cause the AP implemented by device 102 to schedule the communications of device 140 based on the QoS characteristics element in the SCS descriptor element, e.g., as described below.

In some demonstrative aspects, the QoS characteristics element may be configured to include an E2E latency bound field to indicate an E2E latency bound for the E2E traffic flow, e.g., as described below.

In some demonstrative aspects, controller 154 may be configured to control, trigger, instruct, and/or cause the non-AP STA implemented by device 140 to set an E2E latency bound value in the E2E latency bound field in the QoS characteristics element, e.g., as described below.

In some demonstrative aspects, the E2E latency bound value may be configured to indicate an E2E latency bound for the E2E traffic flow to be communicated between the first non-AP STA, e.g., implemented by device 140, and the second non-AP STA, e.g., implemented by device 150, e.g., as described below.

In some demonstrative aspects, controller 124 may be configured to control, trigger, instruct, and/or cause the AP implemented by device 102 to identity the E2E latency bound value in the E2E latency bound field in the QoS characteristics element, e.g., as described below.

In some demonstrative aspects, controller 124 may be configured to control, trigger, instruct, and/or cause the AP implemented by device 102 to schedule the communications of the first non-AP STA, e.g., implemented by device 140, for example, based on the E2E latency bound value, e.g., as described below.

In some demonstrative aspects, the QoS characteristics element may be configured to include a destination STA address field to indicate a destination STA address, e.g., as described below.

In some demonstrative aspects, controller 154 may be configured to control, trigger, instruct, and/or cause the non-AP STA implemented by device 140 to set an address of the second non-AP STA, e.g., implemented by device 150, in a destination STA address field in the QoS characteristics element, e.g., as described below.

In some demonstrative aspects, controller 124 may be configured to control, trigger, instruct, and/or cause the AP implemented by device 102 to identify the address of the second non-AP STA, e.g., implemented by device 150, for example, based on the destination STA address field in the QoS characteristics element, e.g., as described below.

In some demonstrative aspects, the QoS characteristics element may be configured to include unidirectional stream field to indicate a stream directionality of the E2E traffic flow, e.g., as described below.

In some demonstrative aspects, the unidirectional stream field may be configured to indicate whether the E2E traffic flow includes a unidirectional stream, e.g., as described below.

In some demonstrative aspects, controller 154 may be configured to control, trigger, instruct, and/or cause the non-AP STA implemented by device 140 to set a unidirectional stream field in the QoS characteristics element, , for example, to indicate whether the E2E traffic flow includes a unidirectional stream, e.g., as described below.

In some demonstrative aspects, controller 124 may be configured to control, trigger, instruct, and/or cause the AP implemented by device 102 to identify the unidirectional stream field in the QoS characteristics element, for example, to determine whether the E2E traffic flow includes the unidirectional stream, e.g., as described below.

In some demonstrative aspects, the QoS characteristics element may be configured to include a control information (info) field, e.g., as described below.

In some demonstrative aspects, the control info field may be configured to include the unidirectional stream field, e.g., as described below.

In other aspects, the unidirectional stream field may be implemented as part of any other field and/or element of the QoS characteristics element.

In some demonstrative aspects, some or all of the E2E QoS information may be set in an E2E QoS field in the SCS descriptor element, e.g., as described below.

In some demonstrative aspects, controller 154 may be configured to control, trigger, instruct, and/or cause the non-AP STA implemented by device 140 to set the E2E QoS information in an E2E QoS field of the SCS descriptor element, e.g., as described below.

In some demonstrative aspects, the SCS descriptor element may include an element identifier (ID) field, e.g., as described below.

In some demonstrative aspects, the SCS descriptor element may include a length field, for example, after the element ID field, e.g., as described below.

In some demonstrative aspects, the SCS descriptor element may include an SCS ID field, for example, after the length field, e.g., as described below.

In some demonstrative aspects, the SCS descriptor element may include a request type field, for example, after the SCSID field, e.g., as described below.

In some demonstrative aspects, the E2E QoS field may be, for example, after the SCSID field, e.g., as described below.

In other aspects, the E2E QoS field may be implemented in any other location in the SCS descriptor element.

In some demonstrative aspects, controller 124 may be configured to control, trigger, instruct, and/or cause the AP implemented by device 102 to identify the E2E QoS information in the E2E QoS field of the SCS descriptor element, e.g., as described below.

In some demonstrative aspects, controller 124 may be configured to control, trigger, instruct, and/or cause the AP implemented by device 102 to schedule the communications of the first non-AP STA, e.g., implemented by device 140, for example, based on the E2E QoS information in the E2E QoS field of the SCS descriptor element received from the first non-AP STA, e.g., as described below.

In some demonstrative aspects, the E2E traffic flow may include a traffic flow to be communicated via the AP, e.g., implemented by device 102, e.g., as described below.

In some demonstrative aspects, the E2E traffic flow may include a traffic flow to be communicated via a P2P link between the first non-AP STA, e.g., implemented by device 140, and the second non-AP STA, e.g., implemented by device 150, e.g., as described below.

In some demonstrative aspects, controller 124 may be configured to control, trigger, instruct, and/or cause the AP implemented by device 102 to schedule communications over the P2P link, for example, based on the E2E QoS requirement indicated by the E2E QoS information received from the first non-AP STA, e.g., as described below.

In some demonstrative aspects, controller 124 may be configured to control, trigger, instruct, and/or cause the AP implemented by device 102 to schedule communications over the P2P link and/or an infrastructure link, for example, based on the E2E QoS requirement indicated by the E2E QoS information received from the first non-AP STA, e.g., as described below.

In some demonstrative aspects, the E2E traffic flow may include a bidirectional traffic flow to be communicated, for example, via a first unidirectional flow and a second unidirectional flow, e.g., as described below.

In some demonstrative aspects, the first unidirectional flow may be from the first non-AP STA, e.g., implemented by device 140, to the second non-AP STA, e.g., implemented by device 150, e.g., as described below.

In some demonstrative aspects, the second unidirectional flow may be from the second non-AP STA, e.g., implemented by device 150, to the first non-AP STA, e.g., implemented by device 140, e.g., as described below.

In some demonstrative aspects, the SCS descriptor element may be configured to include a first QoS characteristics element and a second QoS characteristics element, e.g., as described below.

In some demonstrative aspects, controller 154 may be configured to control, trigger, instruct, and/or cause the non-AP STA implemented by device 140 to set a first QoS characteristics element and a second QoS characteristics element in the SCS descriptor element, e.g., as described below.

In some demonstrative aspects, the first QoS characteristics element may include QoS information corresponding to the first unidirectional flow, e.g., as described below.

In some demonstrative aspects, the second QoS characteristics element may include QoS information corresponding to the second unidirectional flow, e.g., as described below.

In some demonstrative aspects, controller 124 may be configured to control, trigger, instruct, and/or cause the AP implemented by device 102 to identify the first QoS characteristics element, e.g., corresponding to the first unidirectional flow, and the second QoS characteristics element, e.g., corresponding to the second unidirectional flow, for example, in the SCS descriptor element, e.g., as described below.

In some demonstrative aspects, controller 124 may be configured to control, trigger, instruct, and/or cause the AP implemented by device 102 to schedule communications over the first unidirectional flow, for example, based on the QoS information in the first QoS characteristics element, e.g., as described below.

In some demonstrative aspects, controller 124 may be configured to control, trigger, instruct, and/or cause the AP implemented by device 102 to schedule communications over the second unidirectional flow, for example, based on the QoS information in the second QoS characteristics element, e.g., as described below.

In some demonstrative aspects, parameters, e.g., the E2E QoS information, of an E2E traffic flow from a first STA (STA-1), e.g., implemented by device 140, to a second STA (STA-2), e.g., implemented by device 150, may be obtained by both the STA-1 and the STA-2, for example, by sending individual SCS setup request frames to an AP, e.g., implemented by device 102. For example, an individual SCS setup request frame may include, for example, an SCSID, a MAC address, and/or any other additional or alternative information, for the other SCS setup request frame.

For example, the E2E traffic flow may be communicated from the STA-1 to the STA-2, for example, via the AP.

According to this example, the STA-1 may send an SCS request frame including information for UL traffic, e.g., with a first SCSID, denoted "x". For example, a delay bound in a QoS Characteristics element, e.g., in the SCS request frame, may correspond to an end-to-end latency bound for the E2E traffic flow. For example, the SCS request frame may include a second SCSID, denoted "y", and an address of the STA-2. For example, the SCSID "y" may be used by the STA-2 to send an other SCS request frame to the AP.

According to this example, the STA-2 may send the other SCS request frame including, for example, information for DL traffic with the SCSID "y". For example, a delay bound in a QoS Characteristics element sent by the STA-2, e.g., in the other SCS request frame, may correspond to the end-to-end latency bound of the E2E traffic flow. For example, the other SCS request frame from the STA-2 may further include the SCSID "x", and the address of the STA-1.

In some demonstrative aspects, the AP may receive the two SCS requests, e.g., the SCS request from the STA-1 and the SCS request from the STA-2. For example, the AP may use the SCSID values, e.g., the SCSID "x" and the SCSID "y", and/or sender MAC address information from the STA-1 and/or the STA-2, for example, to correlate the two SCS streams of the E2E traffic flow.

In some demonstrative aspects, the E2E QoS information may be configured to signal an MTP latency of an overall bi-directional flow, e.g., as described below.

For example, the STA-1 may send an SCS setup request frame including E2E QoS information to the AP. For example, the E2E QoS information may include information, for example, for constituent unidirectional flows. For example, the E2E QoS information may include an indication of a processing delay at the STA-2.

In some demonstrative aspects, the STA-1 may signal to the AP an MTP latency of the bi-directional flow, and the STA-2 may signal to the AP a processing delay at the STA-2, which is associated with the bi-directional flow. For example, the processing delay at the STA-2 may be signaled in a separate SCS request frame, which may be configured, for example, to include a new element or a new frame exchange.

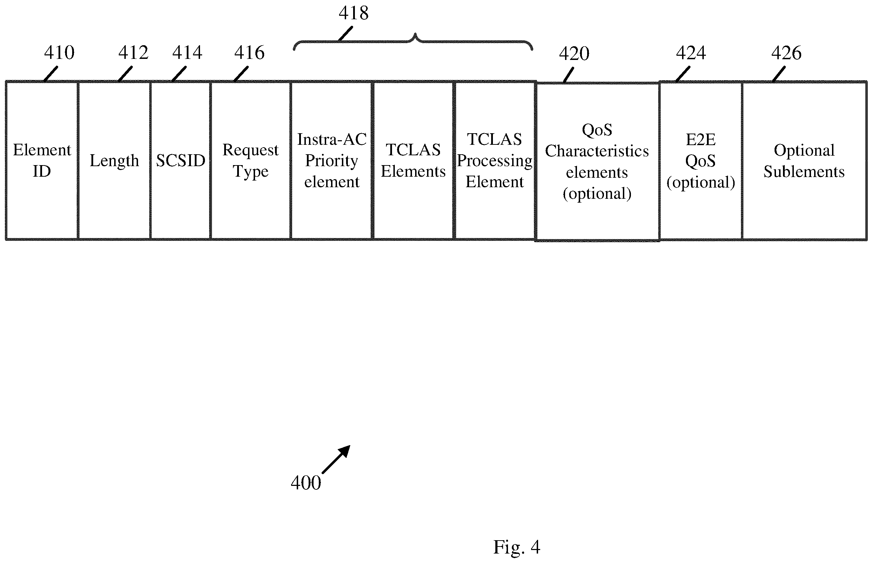

Reference is made to Fig. 4, which schematically illustrates an SCS descriptor element 400, in accordance with some demonstrative aspects. For example, device 102 (Fig. 1) and/or device 140 (Fig. 1) may be configured to generate, process and/or communicate one or more frames and/or messages including the SCS descriptor element 400.

In some demonstrative aspects, the SCS descriptor element 400 may be communicated in an SCS setup request frame, for example, to support a Semi-static signaling.

In some demonstrative aspects, the SCS setup request frame from a first non-AP STA (STA-1) may include the QoS information to define QoS requirements of a unidirectional SCS stream from a first non-AP STA (STA-1) to a second non-AP STA (STA-2).

In some demonstrative aspects, as shown in Fig. 4, the SCS descriptor element 400 may include an element ID field 410, a length field 412 after the element ID field 410, an SCSID field 414 after the length field 412, a request type field 416 after the SCSID field 414, and one or more predefined parameter elements and/or fields 418 after the request type field 416.

In some demonstrative aspects, as shown in Fig. 4, the SCS descriptor element 400 may include one or more QoS characteristics elements 420, e.g., an optional QoS characteristics element, for example, after the one or more predefined

In some demonstrative aspects, as shown in Fig. 4, the SCS descriptor element 400 may include an E2E QoS field 424, e.g., an optional E2E QoS field, for example, after the SCSID field 414 and/or after the QoS characteristics element 420.

In some demonstrative aspects, as shown in Fig. 4, the SCS descriptor element 400 may include one or more optional/reserved subelements 426, e.g., after the E2E QoS field 424.

In some demonstrative aspects, a non-AP STA, e.g., implemented by device 140 (Fig. 1) may be configured to set the E2E QoS information in the QoS characteristics element 420 in the SCS descriptor element 400.

In some demonstrative aspects, an AP, e.g., implemented by device 102 (Fig. 1), may be configured to identify the E2E QoS information in the QoS characteristics element 420 in the SCS descriptor element 400, and to schedule communications of the non-AP STA based, for example, on an E2E QoS requirement indicated by the QoS characteristics element 420.

In some demonstrative aspects, a non-AP STA, e.g., implemented by device 140 (Fig. 1), may be configured to set the E2E QoS information in the E2E QoS field 424 in the SCS descriptor element 400, e.g., instead of, or in addition to, setting the E2E QoS information in the QoS characteristics element 420.

In some demonstrative aspects, an AP, e.g., implemented by device 102 (Fig. 1), may be configured to identify the E2E QoS information in the E2E QoS field 424 in the SCS descriptor element 400, and to schedule communications of the non-AP STA based, for example, on E2E QoS requirement in the E2E QoS field 424.

In some demonstrative aspects, the E2E QoS information may include an end-to-end latency bound, e.g., in QoS characteristics element 420 or in E2E QoS field 424.

In some demonstrative aspects, the E2E QoS information may include an address of the destination STA, e.g., address of the STA-2, as described above.

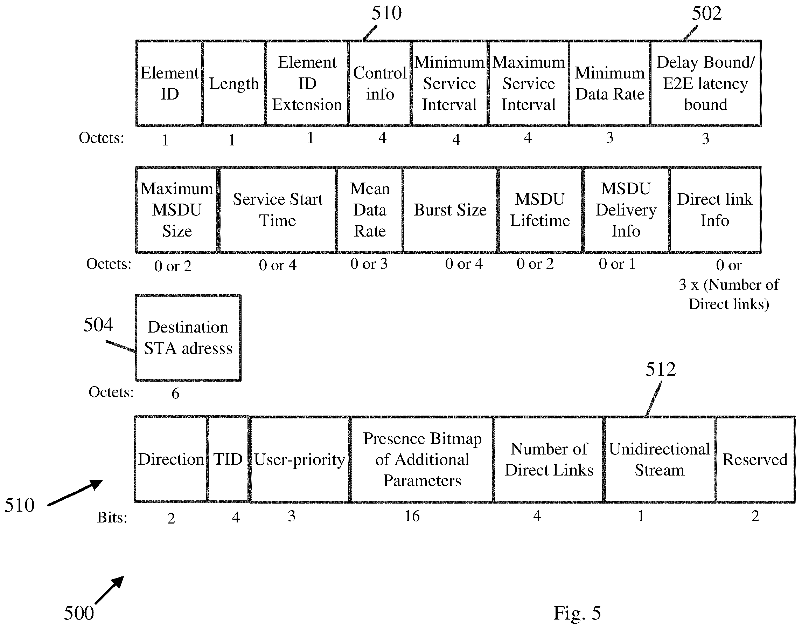

Reference is made to Fig. 5, which schematically illustrates a QoS characteristics element 500, in accordance with some demonstrative aspects. For example, device 102 (Fig. 1) and/or device 140 (Fig. 1) may be configured to generate, process and/or communicate one or more frames and/or messages including QoS characteristics element 500.

In some demonstrative aspects, QoS characteristics elements 420 (Fig. 4) may include QoS characteristics element 500.

In some demonstrative aspects, QoS characteristics element 500 may include information, which may be configured to support and/or may be required to support setting up a unidirectional SCS stream.

In some demonstrative aspects, as shown in Fig. 5, the QoS characteristics element 500 may include an E2E latency bound field 502, which may be configured , for example, to signal an E2E latency bound.

In some demonstrative aspects, E2E latency bound field 502 may be implemented by configuring a setting of an Aggregate Delay Bound field.

In some demonstrative aspects, E2E latency bound field 502 may be implemented as part of a newly defined field in the QoS Characteristics element 500.

In some demonstrative aspects, as shown in Fig. 5, the QoS characteristics element 500 may include a destination STA address field 504.

In some demonstrative aspects, as shown in Fig. 5, the QoS characteristics element 500 may include a control info field 510.

In some demonstrative aspects, as shown in Fig. 5, the control info field 510 may include a unidirectional stream field 512.

In some demonstrative aspects, as shown in Fig. 5, a bit, e.g., one bit, in control Info field 510 of the QoS Characteristics element 500, may be configured as the unidirectional stream field 512, for example, to signal that information in the QoS Characteristics element 500 is for a unidirectional stream.

For example, when the bit of unidirectional stream field 512 is set, e.g., to "1", an additional field, e.g., the destination STA address field 504, may be included in the QoS Characteristics element 500, for example, to include one or more parameters to identify the destination STA of the unidirectional stream, e.g., a destination address of the other STA, and/or any other additional and/or alternative parameters.

In some demonstrative aspects, a non-AP STA, e.g., implemented by device 140 (Fig. 1), may be configured to set the E2E latency bound value in the E2E latency bound field 502, to set an address of another non-AP STA, e.g., implemented by device 150 (Fig. 1), in the destination STA address field 504, and to set the unidirectional stream field 512 to indicate whether an E2E traffic flow includes a unidirectional stream.

In some demonstrative aspects, an AP, e.g., implemented by device 102 (Fig. 1), may be configured to process the E2E latency bound field 502, the destination STA address field 504, and the unidirectional stream field 512 in the QoS characteristics element 500, and to schedule communications of the non-AP STA based, for example, on the information in the QoS characteristics element 500.

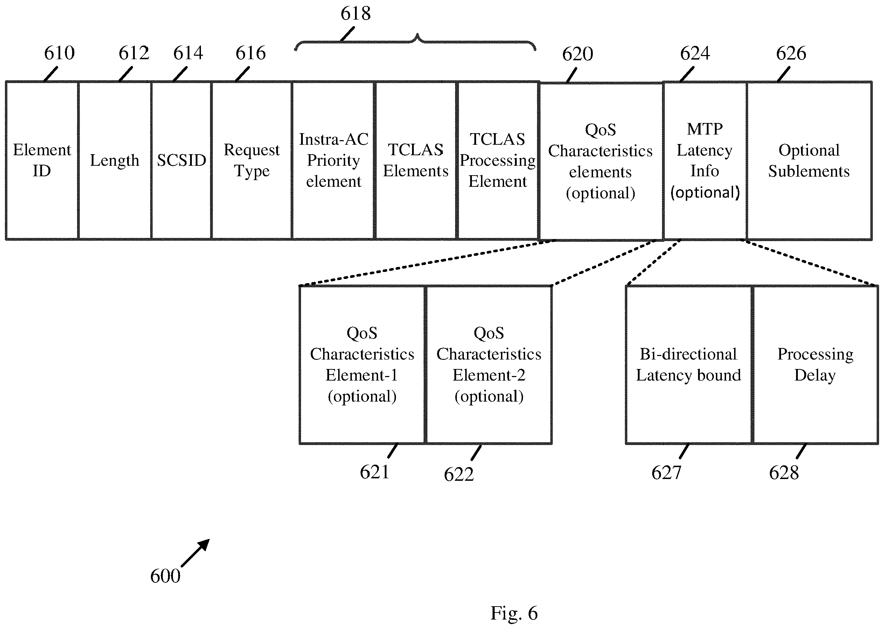

Reference is made to Fig. 6, which schematically illustrates an SCS descriptor element 600, in accordance with some demonstrative aspects. For example, device 102 (Fig. 1) and/or device 140 (Fig. 1) may be configured to generate, process and/or communicate one or more frames and/or messages including the SCS descriptor element 600.

In some demonstrative aspects, as shown in Fig. 6, the SCS descriptor element 600 may include an element ID field 610, a length field 612 after the element ID field 610, an SCS ID (SCSID) field 614 after the length field 612, a request type field 616 after the SCSID field 614, and one or more predefined parameter elements and/or fields 618 after the request type field 616.

In some demonstrative aspects, as shown in Fig. 6, the SCS descriptor element 600 may include one or more QoS characteristics elements 620, e.g., one or more optional QoS characteristics elements, for example, after the one or more predefined parameter elements and/or fields 618.

In some demonstrative aspects, as shown in Fig. 6, the SCS descriptor element 600 may include a first QoS characteristics element 621 and a second QoS characteristics element 622, e.g., after the one or more predefined parameter elements and/or fields 618.

In one example, QoS characteristics element 621 and/or QoS characteristics element 622 may include QoS characteristics element 500 (Fig. 5).

In some demonstrative aspects, SCS descriptor element 600 may be configured to support signaling of E2E QoS information of a bidirectional traffic flow to be communicated via a first unidirectional flow and a second unidirectional flow, e.g., as described above.

In some demonstrative aspects, the first QoS characteristics element 621 may include QoS information corresponding to the first unidirectional flow, e.g., as described above.

In some demonstrative aspects, the first QoS characteristics element 621 may be configured to signal a one-way latency bound corresponding to the first unidirectional flow, for example, in a delay bound field of the QoS characteristics element 621, e.g., as described above.

In some demonstrative aspects, the second QoS characteristics element 622 may include QoS information corresponding to the second unidirectional flow, e.g., as described above.

In some demonstrative aspects, the first QoS characteristics element 622 may be configured to signal a one-way latency bound corresponding to the second unidirectional flow, for example, in a delay bound field of the QoS characteristics element 622, e.g., as described above.

In some demonstrative aspects, as shown in Fig. 6, the SCS descriptor element 600 may include an MTP latency info field 624, e.g., an optional MTP latency info field, for example, to indicate MTP latency information for the bi-directional traffic flow.

In some demonstrative aspects, as shown in Fig. 6, the MTP latency info field 624 may include a bi-directional latency bound field 627, for example, to indicate an E2E latency requirement for the bi-directional traffic flow.

In some demonstrative aspects, as shown in Fig. 6, the MTP latency bound info field 624 may include a processing delay field 628, for example, to indicate a processing delay of the bi-directional traffic flow.

In some demonstrative aspects, as shown in Fig. 6, the SCS descriptor element 600 may include one or more optional/reserved subelements 626, e.g., after the QoS characteristics elements 620.

In some demonstrative aspects, a non-AP STA, e.g., implemented by device 140 (Fig. 1), may be configured to set the first QoS characteristics element 621 and the second QoS characteristics element 622 in the SCS descriptor element 600.

In some demonstrative aspects, an AP, e.g., implemented by device 102 (Fig. 1), may be configured to identify the first QoS characteristics element 621 and the second QoS characteristics element 622 in the SCS descriptor element 600. For example, the AP may be configured to schedule communications over the first unidirectional flow based on QoS information in the first QoS characteristics element 621, and to schedule communications over the second unidirectional flow based on QoS information in the second QoS characteristics element 622, e.g., as described above.

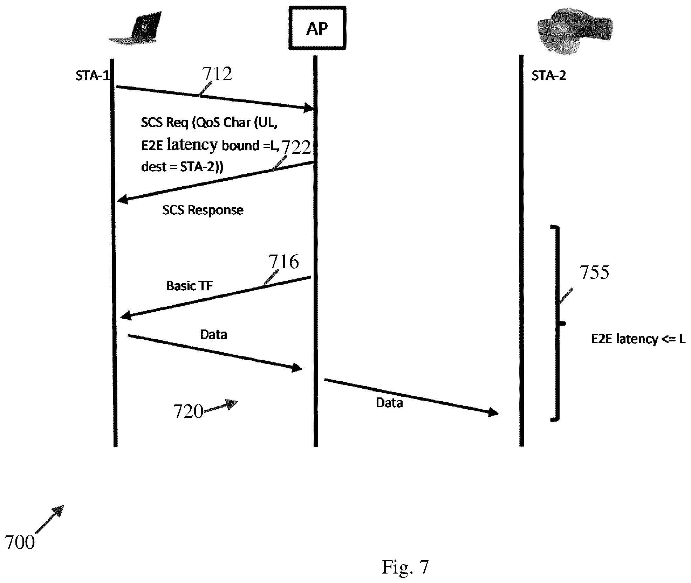

Reference is made to Fig. 7, which schematically illustrates E2E QoS information signaling 700 between a first STA (STA-1) and an AP to schedule communication of an E2E traffic flow 720 to be communicated between the first STA and a second STA (STA-2), in accordance with some demonstrative aspects. For example, one or more of the operations of Fig. 7 may be performed by one or more elements of a system, e.g., system 100 (Fig. 1), for example, one or more wireless devices, e.g., device 102 (Fig. 1), device 140 (Fig. 1), and/or device 150 (Fig. 1). In one example, device 140 (Fig. 1) may be configured to perform one or more operations of the first STA (STA-1), device 150 (Fig. 1) may be configured to perform one or more operations of the second STA (STA-2), and/or device 102 (Fig. 1) may be configured to perform one or more operations of the AP.

In one example, the STA-1 may be implemented by a computing device, e.g., a laptop, and/or the STA-2 may be implemented by an HMD. In other aspects, STA-1 and/or STA-2 may be implemented by any other devices.

In some demonstrative aspects, as shown in Fig. 7, the STA-1 and the STA-2 may be associated with the same AP.

In some demonstrative aspects, as shown in Fig. 7, there may be a unidirectional SCS stream, e.g., an E2E traffic flow 720, between two end-devices associated with a same AP, e.g., between STA-1 and STA-2, which are associated with the same AP.

In some demonstrative aspects, as shown in Fig. 7, the STA-1 may signal to the AP E2E QoS information about the unidirectional stream from the STA-1 to the STA-2.

In some demonstrative aspects, as shown in Fig. 7, the STA-1 may signal the E2E QoS information to the AP using a modified QoS Characteristics element, e.g., QoS Characteristics element 500 (Fig. 5).

In some demonstrative aspects, as shown in Fig. 7, the AP may schedule communications of the E2E traffic flow 720, for example, based on the E2E QoS information.

In some demonstrative aspects, the AP may schedule UL communication from the STA1 to the AP, and/or DL communications from the AP to the STA 2, for example, based on the overall E2E latency bound indicated by the E2E QoS information, e.g., such that an E2E latency 755 is to meet the E2E latency bound.

In some demonstrative aspects, as shown in Fig. 7, the AP may schedule communications of the STA-1 at appropriate intervals, and may forward to the STA-2 UL traffic received from the STA-1, for example, so that an overall E2E latency bound, denoted L, may be met, e.g., *E2E latency <*=*L.*

In some demonstrative aspects, as shown in Fig. 7, the STA-1 may send an SCS request 712 to the AP.

In some demonstrative aspects, as shown in Fig. 7, the SCS request 712 may include a QoS characteristics element, e.g., the QoS characteristics element 500 (Fig. 5).

In some demonstrative aspects, as shown in Fig. 7, the QoS characteristics element in the SCS request 712, may include the E2E latency bound value, e.g., in the E2E latency bound field 502 (Fig. 5), an address of the STA-2, e.g., in the destination STA address field 504 (Fig. 5), and an indication that the E2E traffic flow 720 includes a unidirectional stream, e.g., in the unidirectional stream field 512 (Fig. 5).

In some demonstrative aspects, as shown in Fig. 7, the E2E latency bound value may indicate the E2E latency bound L .

In some demonstrative aspects, some or all of the E2E QoS information to set up an E2E unidirectional SCS stream, e.g., the E2E traffic flow 720, may be contained in a new subelement in an SCS Descriptor element, e.g., in the SCS descriptor element 400 (Fig. 4).

In one example, the new subelement in the SCS Descriptor element may include, for example, an E2E QoS field, e.g., E2E QoS field 424 (Fig. 4), which may be separate from the QoS characteristics element.

In some demonstrative aspects, as shown in Fig. 7, the AP may transmit an SCS response 722 to the STA-1.

In some demonstrative aspects, as shown in Fig. 7, the AP may transmit a trigger frame 716 to the STA-1, for example, to trigger transmission of data of the E2E traffic flow 720 from the STA-1.

In some demonstrative aspects, the AP may schedule communication for the E2E traffic flow 720, for example, such that a time interval between transmission of the trigger frame 716 and reception of the data of the E2E traffic flow 720 at the STA-2, may not be greater than the E2E latency bound value L.

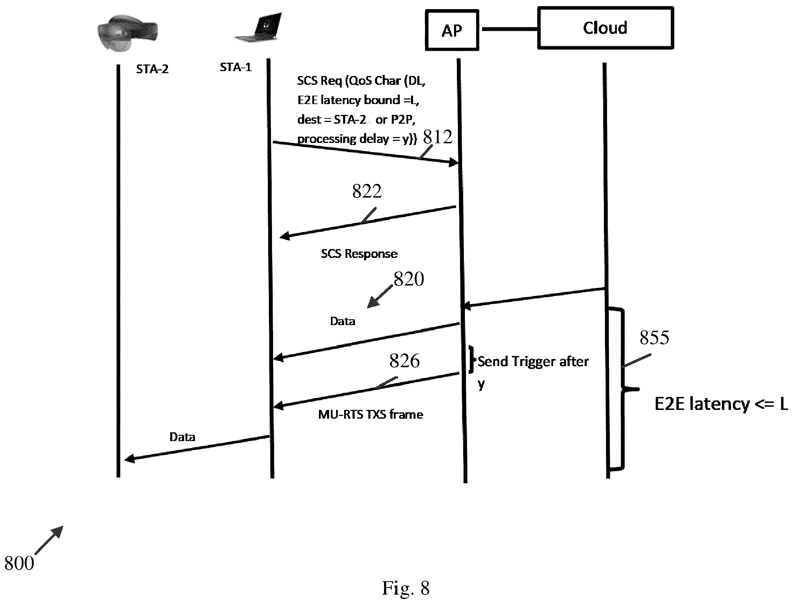

Reference is made to Fig. 8, which schematically illustrates E2E QoS information signaling 800 between a first STA (STA-1) and an AP to schedule communication for an E2E traffic flow 820 to be communicated between the first STA and a second STA (STA-2), in accordance with some demonstrative aspects. For example, one or more of the operations of Fig. 8 may be performed by one or more elements of a system, e.g., system 100 (Fig. 1), for example, one or more wireless devices, e.g., device 102 (Fig. 1), device 140 (Fig. 1), and/or device 150 (Fig. 1). In one example, device 140 (Fig. 1) may be configured to perform one or more operations of the first STA (STA-1), device 150 (Fig. 1) may be configured to perform one or more operations of the second STA (STA-2), and/or device 102 (Fig. 1) may be configured to perform one or more operations of the AP.

In some demonstrative aspects, as shown in Fig. 8, the STA-1, e.g., implemented by a laptop, may have a P2P link with the STA-2, e.g., implemented by an HMD. For example, the STA-1 may be an intermediate node between a cloud service and/or an edge device and the STA-2.

In some demonstrative aspects, the STA-1 may request resources from the AP for a unidirectional flow to STA-2, e.g., to support E2E traffic flow 820. For example, the STA-1 may include additional information about a processing delay at STA-1, e.g., in an SCS request frame 812 to the AP, e.g., as described below.

In some demonstrative aspects, the STA-1 may determine an E2E latency bound for the unidirectional flow to STA-2, for example, while taking into account its internal processing delay of the STA-1. According to this example, the STA-1 may signal the E2E latency bound to the AP, for example, even without sharing with the AP information on the internal processing delay of the STA-1.

In some demonstrative aspects, the STA-2 may not be associated to a same AP as the STA-1. For example, in such case the STA-1 may inform the AP that the STA-2 is not associated with the AP, e.g., in the SCS request frame 812.

In some demonstrative aspects, as shown in Fig. 8, the STA-1 may send the SCS request 812 to the AP.

In some demonstrative aspects, as shown in Fig. 8, the SCS request 812 may include a QoS characteristics element, e.g., the QoS characteristics element 500 (Fig. 5).

In some demonstrative aspects, as shown in Fig. 8, the QoS characteristics element in the SCS request 812, may include the E2E latency bound value, e.g., in the E2E latency bound field 502 (Fig. 5), an address of the STA-2, e.g., in the destination STA address field 504 (Fig. 5), and an indication that the E2E traffic flow 820 includes a unidirectional stream, e.g., in the unidirectional stream field 512 (Fig. 5).

In some demonstrative aspects, as shown in Fig. 8, the E2E latency bound value may indicate the E2E latency bound L.

In some demonstrative aspects, as shown in Fig. 8, the QoS characteristics element in the SCS request 812, may include a processing delay value y to indicate the processing delay of the STA-1.

In some demonstrative aspects, some or all of the E2E QoS information to set up an E2E unidirectional SCS stream, e.g., the E2E traffic flow 820, may be contained in a new subelement in an SCS Descriptor element, e.g., in the SCS descriptor element 400 (Fig. 4).

In one example, the new subelement in the SCS Descriptor element may include, for example, an E2E QoS field, e.g., E2E QoS field 424 (Fig. 4), which may be separate from the QoS characteristics element.

In some demonstrative aspects, as shown in Fig. 8, the AP may receive the SCS request frame 812 from the STA-1.

In some demonstrative aspects, the AP may identify that a second hop of the E2E traffic flow 820 is over a P2P link, for example, either explicitly, or based on a MAC address of STA-2, e.g., provided by the STA-1 in the SCS request 812. For example, the AP may determine that the resource allocation of the E2E traffic flow 820 is to be allocated for a P2P link, for example, based on a determination that the MAC address of the STA-2 is not associated to the AP.

In some demonstrative aspects, as shown in Fig. 8, the AP may transmit an SCS response 822 to the STA-1.

In some demonstrative aspects, as shown in Fig. 8, the AP may communicate data of the E2E traffic flow 820 from the cloud service to the STA-1.

In some demonstrative aspects, as shown in Fig. 8, the AP may transmit a trigger frame 826 to the STA-1, for example, to trigger transmission of the E2E traffic flow 820 from the STA-1 to the STA-2, e.g., over the P2P link between the STA-1 and the STA-2.

In some demonstrative aspects, the AP may schedule communication for the E2E traffic flow 820, for example, such that a time interval between transmission of the data of the E2E traffic flow 820 from the cloud service, including the transmission of the data of the data of the E2E traffic flow 820 from the AP to the STA-1 and reception of the E2E traffic flow 820 at the STA-2, may not be greater than the E2E latency bound value L.

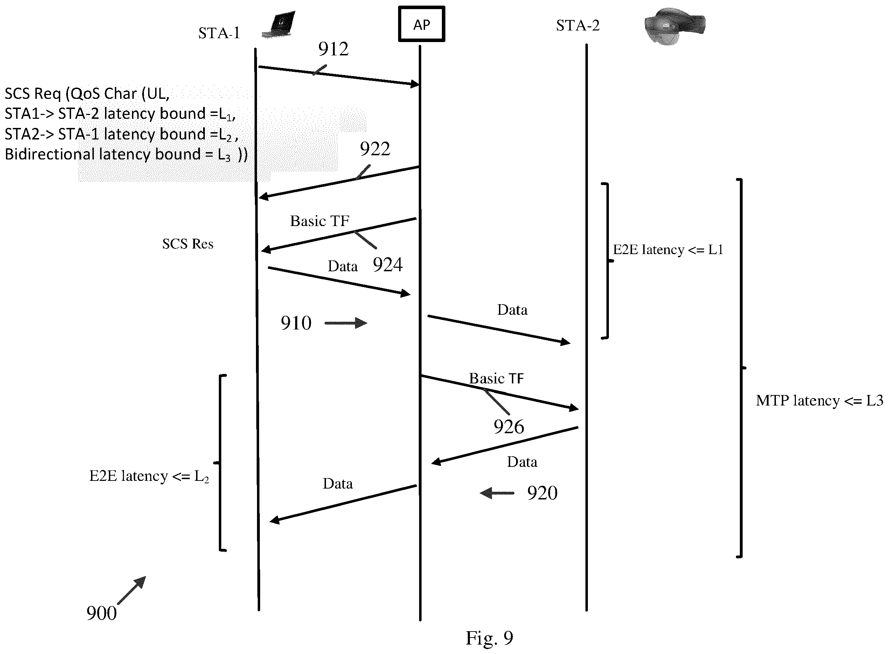

Reference is made to Fig. 9, which schematically illustrates E2E QoS information signaling 900 between a first STA (STA-1) and an AP to schedule communication for a bidirectional traffic flow to be communicated between the first STA and a second STA (STA-2), in accordance with some demonstrative aspects. For example, one or more of the operations of Fig. 9 may be performed by one or more elements of a system, e.g., system 100 (Fig. 1), for example, one or more wireless devices, e.g., device 102 (Fig. 1), device 140 (Fig. 1), and/or device 150 (Fig. 1). In one example, device 140 (Fig. 1) may be configured to perform one or more operations of the first STA (STA-1), device 150 (Fig. 1) may be configured to perform one or more operations of the second STA (STA-2), and/or device 102 (Fig. 1) may be configured to perform one or more operations of the AP.

In some demonstrative aspects, as shown in Fig. 9, the STA-1, e.g., implemented by a laptop, and the STA-2, e.g., implemented by an HMD, may be associated with the AP.

In some demonstrative aspects, as shown in Fig. 9, the bi-directional traffic flow may include a first unidirectional flow 910 and a second unidirectional flow 920.

In some demonstrative aspects, as shown in Fig. 9, the first unidirectional flow 910 may be from the STA-1 to the STA-2, e.g., via the AP.

In some demonstrative aspects, as shown in Fig. 9, the second unidirectional flow 920 may be from the STA-2 to the STA-1, e.g., via the AP.

In some demonstrative aspects, the STA-1 may signal to the AP an MTP latency of the bidirectional traffic flow to the STA-2.

In some demonstrative aspects, the STA-1 may transmit to the AP an SCS request 912 including an SCS descriptor element, e.g., SCS descriptor element 600 (Fig. 6), which may include E2E QoS information to indicate a first E2E latency bound, denoted *L₁,* for the first unidirectional flow from STA-1 to the STA-2, and a second E2E latency bound, denoted L₂, for the second unidirectional flow from STA-2 to the STA-1.

For example, information to indicate the E2E latency bound for the first unidirectional flow may be included in a first QoS characteristics element, e.g., QoS characteristics element 621 (Fig. 6), and/or possibly in another new element.

For example, information to indicate the E2E latency bound for the second unidirectional flow may be included in a second QoS characteristics element, e.g., QoS characteristics element 622 (Fig. 6), and/or possibly in another new element.

In some demonstrative aspects, the one-way latency bound for a unidirectional path, e.g., for each unidirectional path, may be signaled in a delay bound field included in the respective QoS characteristics element. For example, a delay bound field in the QoS characteristics element 621 (Fig. 6) may indicate the first E2E latency bound *L₁* , and/or a delay bound field in the QoS characteristics element 622 (Fig. 6) may indicate the second E2E latency bound *L₂.*

In some demonstrative aspects, a processing delay and MTP latency bound may be signaled in a separate element in the SCS descriptor element. For example, the processing delay may be signaled in processing delay field 628 (Fig. 6), and/or the MTP latency bound may be signaled in bi-directional latency bound field 627 (Fig. 6).

In some demonstrative aspects, as shown in Fig. 9, the STA-1 may send the SCS request 912 to the AP.

In some demonstrative aspects, as shown in Fig. 9, the SCS request 912 may include first and second QoS characteristics elements, e.g., the QoS characteristics elements 621 and 622 (Fig. 6), including the first latency bound *L₁* for the first unidirectional flow 910, and the second latency bound *L₂* for the second unidirectional flow 920, respectively.

In some demonstrative aspects, as shown in Fig. 9, the SCS request 912 may include a bidirectional latency bound, denoted *L₃,* for the bidirectional traffic flow, e.g., in the Bi-directional latency bound field 627 (Fig. 6).

In some demonstrative aspects, the SCS request 912 may include a processing delay value, e.g., in the processing delay field 628 (Fig. 6).

In some demonstrative aspects, as shown in Fig. 9, the AP may receive the SCS request frame 912 from the STA-1.

In some demonstrative aspects, as shown in Fig. 9, the AP may transmit an SCS response 922 to the STA-1.

In some demonstrative aspects, as shown in Fig. 9, the AP may transmit a trigger frame 924 to the STA-1, for example, to schedule communication of the first unidirectional flow 910, e.g., based on the first latency bound *L₁,* the first latency bound *L₂,* and/or the bidirectional latency bound *L₃,.*

In some demonstrative aspects, as shown in Fig. 9, the AP may transmit a trigger frame 926 to the STA-2, for example, to schedule communication of the second unidirectional flow 920, e.g., based on the first latency bound *L₁,* the first latency bound *L₂,* and/or the bidirectional latency bound *L₃,.*

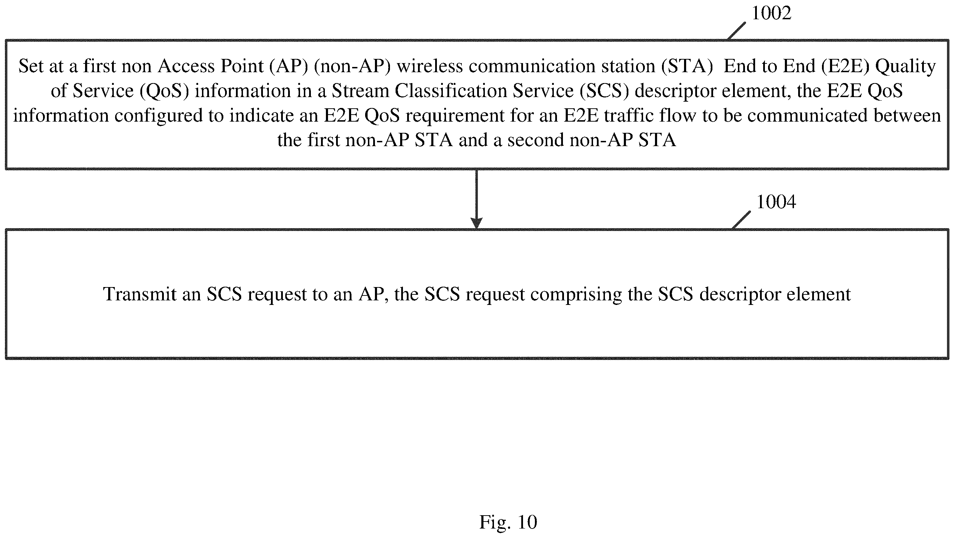

Reference is made to Fig. 10, which schematically illustrates a method of communicating E2E QoS information, in accordance with some demonstrative aspects. For example, one or more of the operations of the method of Fig. 10 may be performed by one or more elements of a system, e.g., system 100 (Fig. 1), for example, one or more wireless devices, e.g., device 102 (Fig. 1) and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1002, the method may include setting at a first non-AP STA E2E QoS information in an SCS descriptor element, the E2E QoS information configured to indicate an E2E QoS requirement for an E2E traffic flow to be communicated between the first non-AP STA and a second non-AP STA. For example, controller 154 (Fig. 1) may be configured to cause the non-AP STA implemented by device 140 (Fig. 1) to set the E2E QoS information in the SCS descriptor element, e.g., as described above.

As indicated at block 1004, the method may include transmitting an SCS request to an AP, the SCS request including the SCS descriptor element. For example, controller 154 (Fig. 1) may be configured to cause the STA implemented by device 140 (Fig. 1) to transmit to device 102 (Fig. 1) the SCS request including the SCS descriptor element, e.g., as described above.

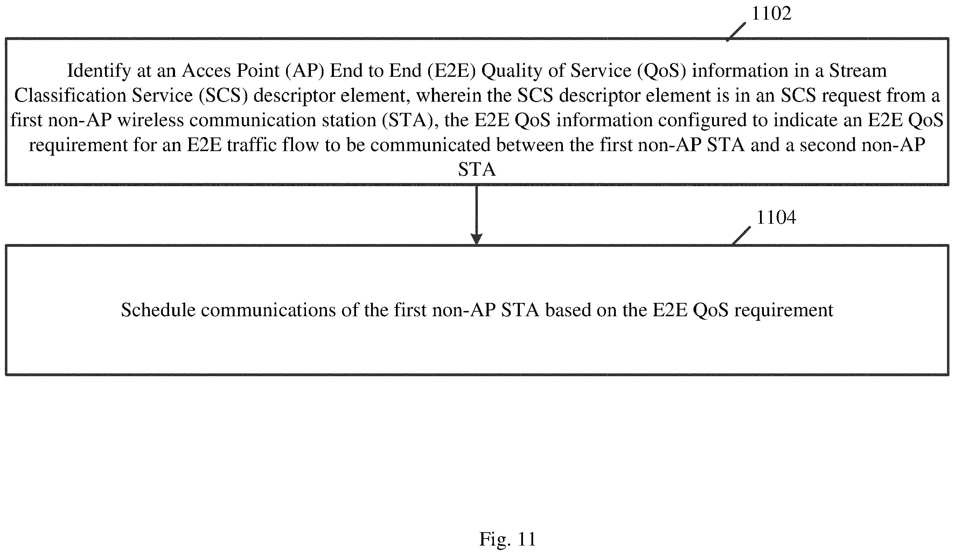

Reference is made to Fig. 11, which schematically illustrates a method of communicating E2E QoS information, in accordance with some demonstrative aspects. For example, one or more of the operations of the method of Fig. 11 may be performed by one or more elements of a system, e.g., system 100 (Fig. 1), for example, one or more wireless devices, e.g., device 102 (Fig. 1) and/or device 140 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1102, the method may include identifying at an AP E2E QoS information in a SCS descriptor element in an SCS request from a first non-AP STA, the E2E QoS information configured to indicate an E2E QoS requirement for an E2E traffic flow to be communicated between the first non-AP STA and a second non-AP STA. For example, controller 124 (Fig. 1) may be configured to cause the AP implemented by device 102 (Fig. 1) to identify the E2E QoS information in the SCS descriptor element, e.g., as described above.

As indicated at block 1104, the method may include scheduling communications of the first non-AP STA based on the E2E QoS requirement. For example, controller 124 (Fig. 1) may be configured to cause the AP implemented by device 102 (Fig. 1) to schedule communications of device 140 (Fig. 1) based on the E2E QoS requirement, e.g., as described above.

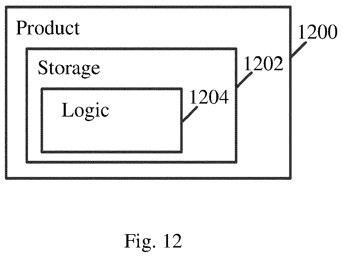

Reference is made to Fig. 12, which schematically illustrates a product of manufacture 1200, in accordance with some demonstrative aspects. Product 1200 may include one or more tangible computer-readable ("machine-readable") non-transitory storage media 1202, which may include computer-executable instructions, e.g., implemented by logic 1204, operable to, when executed by at least one computer processor, enable the at least one computer processor to implement one or more operations at device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to cause device 102 (Fig. 1), device 140 (Fig. 1), MLD 131 (Fig. 1), MLD 151 (Fig. 1), radio 114 (Fig. 1), radio 144 (Fig. 1), transmitter 118 (Fig. 1), transmitter 148 (Fig. 1), receiver 116 (Fig. 1), receiver 146 (Fig. 1), message processor 128 (Fig. 1), message processor 158 (Fig. 1), controller 124 (Fig. 1), and/or controller 154 (Fig. 1), to perform, trigger and/or implement one or more operations and/or functionalities, and/or to perform, trigger and/or implement one or more operations and/or functionalities described with reference to the Figs. 1-11, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1200 and/or machine-readable storage media 1202 may include one or more types of computer-readable storage media capable of storing data, including volatile memory, non-volatile memory, removable or non-removable memory, erasable or non-erasable memory, writeable or re-writeable memory, and the like. For example, machine-readable storage media 1202 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1204 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1204 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising logic and circuitry configured to cause a first non Access Point (AP) (non-AP) wireless communication station (STA) to set End to End (E2E) Quality of Service (QoS) information in a Stream Classification Service (SCS) descriptor element, the E2E QoS information configured to indicate an E2E QoS requirement for an E2E traffic flow to be communicated between the first non-AP STA and a second non-AP STA; and transmit an SCS request to an AP, the SCS request comprising the SCS descriptor element.

Example 2 includes the subject matter of Example 1, and optionally, wherein the E2E QoS information comprises E2E latency bound information configured to indicate an E2E latency bound for the E2E traffic flow to be communicated between the first non-AP STA and the second non-AP STA.

Example 3 includes the subject matter of Example 1 or 2, and optionally, wherein the E2E QoS information comprises a destination STA address to identify an address of the second non-AP STA.

Example 4 includes the subject matter of any one of Examples 1-3, and optionally, wherein the E2E QoS information comprises a directionality indicator to indicate whether the E2E traffic flow comprises a unidirectional stream.

Example 5 includes the subject matter of any one of Examples 1-4, and optionally, wherein the E2E QoS information comprises processing delay information to indicate a processing delay of the first non-AP STA to process data of the E2E traffic flow.

Example 6 includes the subject matter of any one of Examples 1-5, and optionally, wherein the SCS descriptor element comprises a first SCS Identifier (SCSID) to identify an SCS stream between the first non-AP STA and the AP, wherein the E2E QoS information comprises a second SCSID to identify an SCS stream between the second non-AP STA and the AP.

Example 7 includes the subject matter of any one of Examples 1-6, and optionally, wherein the SCS descriptor element comprises Motion-to-Photon (MTP) latency bound information to indicate an MTP latency bound for the E2E traffic flow.

Example 8 includes the subject matter of any one of Examples 1-7, and optionally, wherein the apparatus is configured to cause the first non-AP STA to set the E2E QoS information in a QoS characteristics element in the SCS descriptor element.

Example 9 includes the subject matter of Example 8, and optionally, wherein the apparatus is configured to cause the first non-AP STA to set an E2E latency bound value in an E2E latency bound field in the QoS characteristics element, the E2E latency bound value to indicate an E2E latency bound for the E2E traffic flow to be communicated between the first non-AP STA and the second non-AP STA.

Example 10 includes the subject matter of Example 8 or 9, and optionally, wherein the apparatus is configured to cause the first non-AP STA to set a unidirectional stream field in the QoS characteristics element, the unidirectional stream field to indicate whether the E2E traffic flow comprises a unidirectional stream.

Example 11 includes the subject matter of Example 10, and optionally, wherein the QoS characteristics element comprises a control information (info) field, wherein the control info field comprises the unidirectional stream field.

Example 12 includes the subject matter of any one of Examples 8-11, and optionally, wherein the apparatus is configured to cause the first non-AP STA to set an address of the second non-AP STA in a destination STA address field in the QoS characteristics element.

Example 13 includes the subject matter of any one of Examples 1-7, and optionally, wherein the apparatus is configured to cause the first non-AP STA to set the E2E QoS information in an E2E QoS field of the SCS descriptor element.

Example 14 includes the subject matter of Example 13, and optionally, wherein the SCS descriptor element comprises an element identifier (ID) field, a length field after the element ID field, an SCS ID field after the length field, and a request type field after the SCSID field, wherein the E2E QoS field is after the SCSID field.

Example 15 includes the subject matter of any one of Examples 1-14, and optionally, wherein the E2E traffic flow comprises a traffic flow to be communicated via the AP.

Example 16 includes the subject matter of any one of Examples 1-14, and optionally, wherein the E2E traffic flow comprises a traffic flow to be communicated via a Peer-to-peer (P2P) link between the first non-AP STA and the second non-AP STA.

Example 17 includes the subject matter of any one of Examples 1-14, and optionally, wherein the E2E traffic flow comprises a bidirectional traffic flow to be communicated via a first unidirectional flow and a second unidirectional flow, wherein the first unidirectional flow is from the first non-AP STA to the second non-AP STA, and the second unidirectional flow is from the second non-AP STA to the first non-AP STA.

Example 18 includes the subject matter of Example 17, and optionally, wherein the apparatus is configured to cause the first non-AP STA to set a first QoS characteristics element and a second QoS characteristics element in the SCS descriptor element, wherein the first QoS characteristics element comprises QoS information corresponding to the first unidirectional flow, and the second QoS characteristics element comprises QoS information corresponding to the second unidirectional flow.

Example 19 includes the subject matter of any one of Examples 1-18, and optionally, comprising at least one radio to transmit the SCS request.

Example 20 includes the subject matter of Example 19, and optionally, comprising one or more antennas connected to the radio, and a processor to execute instructions of an operating system of the first non-AP STA.

Example 21 includes an apparatus comprising logic and circuitry configured to cause an Access Point (AP) to identify End to End (E2E) Quality of Service (QoS) information in a Stream Classification Service (SCS) descriptor element, wherein the SCS descriptor element is in an SCS request from a first non-AP wireless communication station (STA), the E2E QoS information configured to indicate an E2E QoS requirement for an E2E traffic flow to be communicated between the first non-AP STA and a second non-AP STA; and schedule communications of the first non-AP STA based on the E2E QoS requirement.

Example 22 includes the subject matter of Example 21, and optionally, wherein the E2E QoS information comprises E2E latency bound information configured to indicate an E2E latency bound for the E2E traffic flow to be communicated between the first non-AP STA and the second non-AP STA.

Example 23 includes the subject matter of Example 21 or 22, and optionally, wherein the E2E QoS information comprises a destination STA address to identify an address of the second non-AP STA.

Example 24 includes the subject matter of any one of Examples 21-23, and optionally, wherein the E2E QoS information comprises a directionality indicator to indicate whether the E2E traffic flow comprises a unidirectional stream.

Example 25 includes the subject matter of any one of Examples 21-24, and optionally, wherein the E2E QoS information comprises processing delay information to indicate a processing delay of the first non-AP STA to process data of the E2E traffic flow.

Example 26 includes the subject matter of any one of Examples 21-25, and optionally, wherein the SCS descriptor element comprises a first SCS Identifier (SCSID) to identify an SCS stream between the first non-AP STA and the AP, wherein the E2E QoS information comprises a second SCSID to identify an SCS stream between the second non-AP STA and the AP.

Example 27 includes the subject matter of any one of Examples 21-26, and optionally, wherein the SCS descriptor element comprises Motion-to-Photon (MTP) latency bound information to indicate an MTP latency bound for the E2E traffic flow.

Example 28 includes the subject matter of any one of Examples 21-27, and optionally, wherein the apparatus is configured to cause the AP to identity the E2E QoS information in a QoS characteristics element in the SCS descriptor element.

Example 29 includes the subject matter of Example 28, and optionally, wherein the apparatus is configured to cause the AP to identify an E2E latency bound value in an E2E latency bound field in the QoS characteristics element, and to schedule the communications of the first non-AP STA based on the E2E latency bound value, wherein the E2E latency bound value is to indicate an E2E latency bound for the E2E traffic flow to be communicated between the first non-AP STA and the second non-AP STA.

Example 30 includes the subject matter of Example 28 or 29, and optionally, wherein the apparatus is configured to cause the AP to identify a unidirectional stream field in the QoS characteristics element, the unidirectional stream field to indicate whether the E2E traffic flow comprises a unidirectional stream.

Example 31 includes the subject matter of Example 30, and optionally, wherein the QoS characteristics element comprises a control information (info) field, wherein the control info field comprises the unidirectional stream field.

Example 32 includes the subject matter of any one of Examples 28-31, and optionally, wherein the apparatus is configured to cause the AP to identify an address of the second non-AP STA in a destination STA address field in the QoS characteristics element.

Example 33 includes the subject matter of any one of Examples 21-27, and optionally, wherein the apparatus is configured to cause the AP to identity the E2E QoS information in an E2E QoS field of the SCS descriptor element.

Example 34 includes the subject matter of Example 33, and optionally, wherein the SCS descriptor element comprises an element identifier (ID) field, a length field after the element ID field, an SCS ID field after the length field, and a request type field after the SCSID field, wherein the E2E QoS field is after the SCSID field.

Example 35 includes the subject matter of any one of Examples 21-34, and optionally, wherein the E2E traffic flow comprises a traffic flow to be communicated via the AP.

Example 36 includes the subject matter of any one of Examples 21-34, and optionally, wherein the E2E traffic flow comprises a traffic flow to be communicated via a Peer-to-peer (P2P) link between the first non-AP STA and the second non-AP STA.

Example 37 includes the subject matter of Example 36, and optionally, wherein the apparatus is configured to cause the AP to schedule communications over the P2P link based on the E2E QoS requirement.

Example 38 includes the subject matter of Example 36, and optionally, wherein the apparatus is configured to cause the AP to schedule communications over the P2P link and an infrastructure link based on the E2E QoS requirement.

Example 39 includes the subject matter of any one of Examples 21-34, and optionally, wherein the E2E traffic flow comprises a bidirectional traffic flow to be communicated via a first unidirectional flow and a second unidirectional flow, wherein the first unidirectional flow is from the first non-AP STA to the second non-AP STA, and the second unidirectional flow is from the second non-AP STA to the first non-AP STA.

Example 40 includes the subject matter of Example 39, and optionally, wherein the apparatus is configured to cause the AP to identify a first QoS characteristics element and a second QoS characteristics element in the SCS descriptor element, to schedule communications over the first unidirectional flow based on QoS information in the first QoS characteristics element, and to schedule communications over the second unidirectional flow based on QoS information in the second QoS characteristics element.

Example 41 includes the subject matter of any one of Examples 21-40, and optionally, comprising at least one radio to receive the SCS request.

Example 42 includes the subject matter of Example 41, and optionally, comprising one or more antennas connected to the radio, and a processor to execute instructions of an operating system of the AP.

Example 43 comprises a wireless communication device comprising the apparatus of any of Examples 1-42.

Example 44 comprises an apparatus comprising means for executing any of the described operations of any of Examples 1-42.

Example 45 comprises a product comprising one or more tangible computer-readable non-transitory storage media comprising instructions operable to, when executed by at least one processor, enable the at least one processor to cause a wireless communication device to perform any of the described operations of any of Examples 1-42.

Example 46 comprises an apparatus comprising: a memory interface; and processing circuitry configured to: perform any of the described operations of any of Examples 1-42.

Example 47 comprises a method comprising any of the described operations of any of Examples 1-42.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a first non Access Point (AP) (non-AP) wireless communication station (STA), the method comprising:
setting End to End (E2E) Quality of Service (QoS) information in a Stream Classification Service (SCS) descriptor element, the E2E QoS information configured to indicate an E2E QoS requirement for an E2E traffic flow to be communicated between the first non-AP STA and a second non-AP STA; and
transmitting an SCS request from the first non-AP STA to an AP, the SCS request comprising the SCS descriptor element.

2. The method of claim 1, wherein the E2E QoS information comprises E2E latency bound information configured to indicate an E2E latency bound for the E2E traffic flow to be communicated between the first non-AP STA and the second non-AP STA.

3. The method of claim 1 or 2, wherein the E2E QoS information comprises a destination STA address to identify an address of the second non-AP STA.

4. The method of any one of claims 1-3, wherein the E2E QoS information comprises a directionality indicator to indicate whether the E2E traffic flow comprises a unidirectional stream.

5. The method of any one of claims 1-4, wherein the E2E QoS information comprises processing delay information to indicate a processing delay of the first non-AP STA to process data of the E2E traffic flow.

6. The method of any one of claims 1-5, wherein the SCS descriptor element comprises a first SCS Identifier (SCSID) to identify an SCS stream between the first non-AP STA and the AP, wherein the E2E QoS information comprises a second SCSID to identify an SCS stream between the second non-AP STA and the AP.

7. The method of any one of claims 1-6, wherein the SCS descriptor element comprises Motion-to-Photon (MTP) latency bound information to indicate an MTP latency bound for the E2E traffic flow.

8. The method of any one of claims 1-7 comprising setting the E2E QoS information in a QoS characteristics element in the SCS descriptor element.

9. The method of claim 8 comprising setting an E2E latency bound value in an E2E latency bound field in the QoS characteristics element, the E2E latency bound value to indicate an E2E latency bound for the E2E traffic flow to be communicated between the first non-AP STA and the second non-AP STA.

10. The method of claim 8 or 9 comprising setting a unidirectional stream field in the QoS characteristics element, the unidirectional stream field to indicate whether the E2E traffic flow comprises a unidirectional stream.

11. The method of any one of claims 1-10, wherein the E2E traffic flow comprises a bidirectional traffic flow to be communicated via a first unidirectional flow and a second unidirectional flow, wherein the first unidirectional flow is from the first non-AP STA to the second non-AP STA, and the second unidirectional flow is from the second non-AP STA to the first non-AP STA.

12. The method of claim 11 comprising setting a first QoS characteristics element and a second QoS characteristics element in the SCS descriptor element, wherein the first QoS characteristics element comprises QoS information corresponding to the first unidirectional flow, and the second QoS characteristics element comprises QoS information corresponding to the second unidirectional flow.

13. An apparatus comprising a controller configured to cause a first non Access Point (AP) (non-AP) wireless communication station (STA) to perform the method of any one of claims 1-12.

14. The apparatus of claim 13 comprising at least one radio to transmit the SCS request, one or more antennas connected to the radio, and a processor to execute instructions of an operating system of the first non-AP STA.

15. A product comprising one or more tangible computer-readable non-transitory storage media comprising instructions operable to, when executed by at least one processor, enable the at least one processor to cause a first non Access Point (AP) (non-AP) wireless communication station (STA) to perform the method of any one of claims 1-12.
